# EUROPEAN PATENT SPECIFICATION

(11) **EP 3 634 655 B1**
(45) Date of publication and mention of the grant of the patent: **01.09.2021**
(21) Application number: 18732157.5
(22) Date of filing: 24.05.2018
(51) Int. Cl.: B07B 13/10, B07B 13/16

(54) **PLANT AND PROCESS FOR THE RECOVERY OF NON-FERROUS METALS FROM THE FINE FRACTION OF WET INCINERATOR BOTTOM ASH**
ANLAGE UND VERFAHREN ZUR RÜCKGEWINNUNG VON NICHTEISENMETALLEN AUS DER FEINFRAKTION DER BODENASCHE EINES NASSVERBRENNERS
USINE ET PROCÉDÉ DE RÉCUPÉRATION DE MÉTAUX NON FERREUX À PARTIR D'UNE FRACTION FINE DE CENDRES DE FOND D'INCINÉRATEUR PAR VOIE HUMIDE

(30) Priority: 05.06.2017 IT 201700061106
(43) Date of publication of application: 15.04.2020
(73) Proprietor: R.M.B. S.p.A., 25080 Polpenazze del Garda (BS) (IT)
(72) Inventor: GOFFI, Antonio, 25080 Polpenazze del Garda (BS) (IT)
(74) Representative: Concone, Emanuele
(86) International application number: PCT/IB2018/053692
(87) International publication number: WO 2018/224907

(56) References cited:
- EP-A1- 2 412 452
- WO-A1-2015/128753
- DE-A1- 3 804 190

## Description

The present invention concerns the recovery of metals from ashes, and in particular a plant and a process to improve the recovery rate and the concentration rate of non-ferrous metals recovered from the fine fraction of wet ash coming from municipal solid waste incinerators (so-called Incinerator Bottom Ash =IBA).

In general, in all incinerators the ash leaving the combustion or post-combustion chamber is extinguished in water and when extracted from the bottom of the extinguishing water it is essentially composed of minerals, gravel, sand, glass and ceramics with an average moisture of 15-20%, in addition to metals such as ferromagnetic steel (5-7% by weight) and a mixture of non-ferromagnetic metals (NF) (3-4% by weight) such as Al, Cu, Zn, Pb, Ag, Au, Pt, Pd, of which about 2/3 are light metals, mostly Al, and about 1/3 are the remaining heavy metals, most of which are in the "fine" fraction, i.e. with dimensions less than 6 mm.

Having been extinguished in water, this ash has a moisture content of 15-20% and must therefore be treated with a ballistic separator suitable for the treatment of a flow of moist material containing particles of various particle sizes, so as to separate the smallest particles from the largest ones and then proceed to recover with traditional techniques any metals present in the largest particle size, which is less moist as a result of the action of the separator. In the following, specific reference will be made to this application, however, it is clear that what is being said also applies to other flows composed of a material soaked in water and not very compact, in which compact particles that do not absorb water (typically metal, plastic and the like) are dispersed.

It is known that a ballistic separator essentially consists of a feeding device, typically a conveyor belt, which conveys the material to be processed to a motorized drum underneath which rotates quickly around an axis arranged perpendicular to the feeding direction. The traditional structure of a ballistic separator drum consists of a cylinder equipped with a number of equally spaced longitudinal throw slats, usually two to four, which radially extend outwards from the circumference of the cylinder and hit the material falling from the feeder projecting the different material components at different distances depending on the properties of each component, so as to achieve the separation.

More specifically, material components that are richer in water and less compact upon impact dampen the hit by breaking up and are thrown relatively close, as well as smaller particles, while more compact and larger components receive a push that throws them further and makes them significantly less moist. The latter form the so-called "positive", i.e. material with a low moisture content, mechanically consistent and with a strong presence of metal, while the former form the so-called "negative", i.e. material soaked in water, with a low mechanical consistency, of small or very small dimensions and negligible or very small presence of metal.

Examples of this type of ballistic separator can be found in patent publications WO 2009/123452 and EP 2412452 which are specifically related to the recovery of metals from wet ashes in waste incinerators, the separators described therein operating on material with particles up to 15 mm in order to separate particles <2 mm from the larger particles between 2 and 15 mm. Because of this wide dimensional range and of the high flow rate of material that can be processed per meter of usable width of the throw drum (of the order of 40-50 t/h), there is a high probability that material overlaps and impacts will occur between the various parts thrown during the ballistic path, resulting in an inaccurate separation between the 0-2 mm size negative and the 2-15 mm size positive. WO 2015/128753 A1 also discloses a ballistic separator for moist ashes from incineration wastes.

As a consequence, a presence of NF metals in the negative and vice versa of waste material in the positive is predicted, therefore it is necessary to use an air jet at a velocity of 15-20 m/s transversally against such material so as to reduce the presence of slurry and small ash in the positive, but in this way also a portion of NF metals is dragged into the negative. In order not to lose further metal, the subsequent treatment of electromagnetic separation with traditional plants including iron removers and eddy current separators takes place at a metal concentration level of 30-40% by weight, resulting in a mixture of low commercial value because it compulsorily requires further processing on site to concentrate to more than 90% the NF metals recovered.

The most common process for the treatment of wet ashes instead requires that they are left to rest for 6-12 weeks to naturally reduce the moisture content below 15%, but this requires the use of large covered and ventilated spaces with the related storage costs and even the removal of the IBA after the rest period is not easy and represents a further increase in costs.

This relatively dry ash can be screened with a grain size of >6 mm using standard screens, for traditional treatment with iron removers and eddy current separators, and with a grain size of <6 mm using elastic vibrating and oscillating screens. However, the fine fraction <6 mm of ash at 15% moisture is still not suitable for subsequent treatments for the recovery of the NF metals present therein, which results in a serious waste since this fraction represents about 50% of the total IBA. In fact, with the prior art processes it is impossible to industrially treat the fine fraction <6 mm because the wet ash less than 2 mm, which represents 60-65% of the fine fraction, is strongly hygroscopic and sticky and tends to bind to the rest making it impossible to recover the metals present in that fraction.

Another type of process involves dry treatment of the IBA, which is placed in a drying oven to reduce the moisture content from 15-20% to about 5%, so that the ash is easily screened in different sizes. In this way it is possible to recover NF metals in percentages even higher than 90% with the use of eddy current separators, the greatest advantage being precisely in the recovery of metals from the fine fraction. However, there are a number of drawbacks to such a procedure that it would be inadvisable to adopt, such as
- the high cost of the plant, which involves the use of a large, difficult-to-manage dryer;
- the need to use anti-dust machinery (sieves, belts, vibrating plates, iron removers, eddy current separators, etc.) to manage the dried ash;
- a dust extraction system with dust filters that is complex and expensive;
- high maintenance costs due to the fact that dry ash is very wearing;
- the cost of operating and consuming energy for the dryer, which is in the order of 8-10 €/t of ash treated.

The purpose of this invention is to provide a plant and process that overcome these drawbacks. This is achieved by means of a plant and a process in which ash at approximately 20% moisture is treated with elastic vibrating screens (e.g. Hein Lehmann type) separating the fine fraction <6 mm, which is divided by a ballistic separation treatment into two phases in which in the second phase the treated material can be the negative, the positive or an intermediate portion coming from the first phase. Other advantageous features are included in the dependent claims.

A first important advantage of the present invention is to make most of the ferrous and non-ferrous metals present in the ash recoverable in order to valorize them and at the same time considerably reduce the costs of disposal of demetallized ash or even valorize it, through reuse at cement plants or as an aggregate for building materials.

A further advantage of this invention comes from the fact that working only on the fine fraction <6 mm the mass of the material to be treated is reduced by 50%, we work on a material with a more homogeneous grain size and we obtain a more precise recovery of the metals present in the ash.

These and other advantages and characteristics of the plant and process according to the present invention will be evident to those skilled in the art from the following detailed description of some of its embodiments with reference to the attached drawings in which:
Fig. 1 is a side view of the drum of a ballistic separator of a plant according to the invention, with a diagram of the various throw trajectories;
Fig.2 is an enlarged view of the detail II of Fig. 1;
Fig.3 is a similar view to Fig. 1, which shows the influence of the inclination of the impact faces of the drum throw slats on the width of the throw paths fan;
Figs.4-6 are schematic diagrams of three possible plant configurations;
Fig.7 is a schematic lateral view of the system according to the diagram of Fig.4 completed with some additional elements for the collection of the separated materials; and
Fig.8 is a schematic frontal view of the plant of Fig.7.

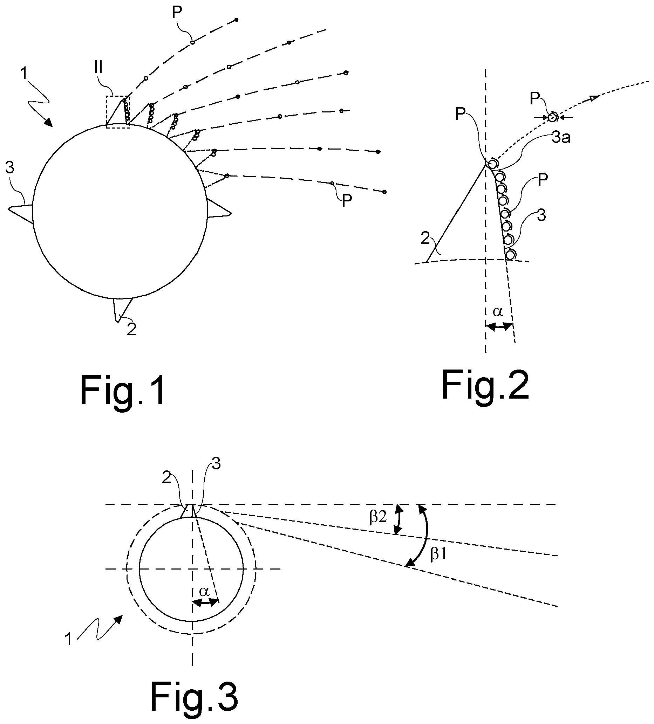

Referring to figures 1-3, there is seen that in a plant according to the present invention prior art ballistic separators are used in which drum 1 is equipped with throw slats 2 having impact faces 3 with a radially proximal end more advanced, in the direction of rotation, than the radially distal end, so that the angle α between the diametral plane containing said distal end and the impact face 3 has a value between about 10° and 45°.

A preferred example of such a separator is described in WO 2015/128753, where the throw slats 2 are easily replaceable to minimize downtime when the separator needs to be adjusted to a different angle α to treat a different material or even just to replace worn slats. In addition, the impact face 3 of the throw slats 2 has a linear slope inclined at the α angle which is radiused in a distal portion 3a to a curved, involute-shaped segment over a height of approximately 17±5% of the overall height of the throw slat 2.

In this way, the parameters that can be varied to adapt the separator to the different characteristics of the material to be treated (particle size, moisture content, etc.) are not only the rotation speed of drum 1, the material feed speed and the position of the material drop point with respect to drum 1, but also the inclination of the impact faces 3. This considerably expands the adjustment possibilities of the separator, since the first three parameters mentioned above affect each other, so that their adjustment intervals are rather limited. For example, the feed speed and the drop position must take into account the position and frequency of passage of slats 2 of drum 1 in order to achieve a correct impact on the material.

This type of separator is more correctly defined as a ballistic-centrifugal separator because the ash, in its variegated composition, once thrown assumes trajectories that vary according to the detachment point, throw speed, size, mass and air resistance of each individual particle P making up the ash itself. The direction and velocity of the throw is due to the centrifugal force assumed by each particle P at the time of detachment at the distal portion 3a of slat 2, after moving along the impact face 3 as better described below.

The result of the throw is that the metallic bodies even of relative small dimensions and the stone materials of dimensions >2 mm are concentrated in the second part of the range (positive), while the ash of dimensions <2 mm, the mush and the slurry present that in part cover, before the throw, the solid parts such as metals and gravel, fall in the first part of the range (negative). The physical phenomena that contribute to obtaining this result are, in temporal sequence:
A. The width of the ash fall fan on drum 1, because the wider said fan is, the wider is the angle that defines the fan of trajectories of the ballistic-centrifugal throw;
B. the impact on the falling ash of the impact face 3 of slat 2;
C. the friction of the ash particles P against the impact face 3 of slat 2, this friction being a sliding and partly rolling friction for gravel and metals with flat surfaces, while it is a rolling friction for round, spherical and cylindrical shapes that tend to roll (Fig.2);
D. the accelerated motion acquired by the ash particles P slipping and rolling or only rolling on face 3 until the detachment moment, after which the particles P maintain a rotary motion in the opposite direction to the direction of rotation of drum 1, and this rotary motion generates on the surface of each particle P a centrifugal force that is able to overcome the adhesion force of the mush and water (Fig.2);
E. the resistance of the air during flight, so that the particles P describe longer or shorter parabolas as a function of the shape factor (Cx), the density of the air, the size and the speed of each particle P.

Thanks to this combination of physical phenomena it is easy to divide the ash particles <2 mm from those >2 mm, just as it is easy to throw metals in the positive collection sector because they have a specific weight higher than the ash as well as a more favorable Cx on average.

This analysis shows that it is possible to calculate with a good approximation the ideal trajectories that the ballistic-centrifugal separator generates during the throws, therefore it is also possible to calculate the ideal flow rate of the ash according to its characteristics (moisture, size, etc.), in order to reduce to a minimum the overlap of the ash particles P and the impacts between them along the throw trajectory. By correcting the trajectory according to the air resistance, it is possible to trace a reliable trajectory fan from which it results that with a single throw it is not possible to obtain a positive that is easily workable and that contains 90% or more of the non-ferrous metals present in the ash <6 mm with 20% moisture.

The fundamental innovation of this plant and process is therefore the use of a ballistic-centrifugal separation system that involves the use of two drums, preferably equipped with four slats spaced 90°. On the basis of the studies and tests carried out, the first of the two drums is able to process, for each meter of useful drum width, an indicative flow rate of 20 t/h of ash <6 mm with a moisture level of about 20%, therefore with a width of 1,5 m the ideal flow rate is 30 t/h, with a width of 2 m it is 40 t/h and so on.

For example, the first drum 1 considered above has a diameter of 525±25 mm with four slats 2 that are 50±10 mm high, and the impact face 3 has an inclination α=15°±3°. The belt feeding the ash has a speed of 0,20±0,05 m/s and the thickness of the layer of ash on the belt, regulated by a special baffle, is between 25 mm and 35 mm, preferably 28 mm.

Note that the greater the angle α, the smaller is the fan width of the trajectories described by the ash during the throw, for example if at an angle α=0° the ideal throw trajectories describe a fan with an angle β1, from the horizontal trajectory to the lower trajectory, at an angle α=15° the fan has an angle β2 which is about half that angle (Fig.3). In this way, the ideal throw trajectories fall within a not too wide fan and the ash particles P describe not too inhomogeneous trajectories because they undergo a more or less equivalent braking (according to the physical phenomenon referred to in point E above).

The dimensions and operating parameters of the second drum are substantially the same as those of the first drum except for the inclination of the impact face 3 which increases by 30-40%, preferably passing from about 15° of the first drum to about 20° of the second drum. In this way, the fan width of the throw trajectories is reduced by about 1/3 compared to the first drum, and the second drum is able to divide with greater precision the ash particles P of size <2 mm, sending them in the collection area of the negative, from the ash >2 mm and in particular from metals even of small size but of higher mass since they have a much higher density.

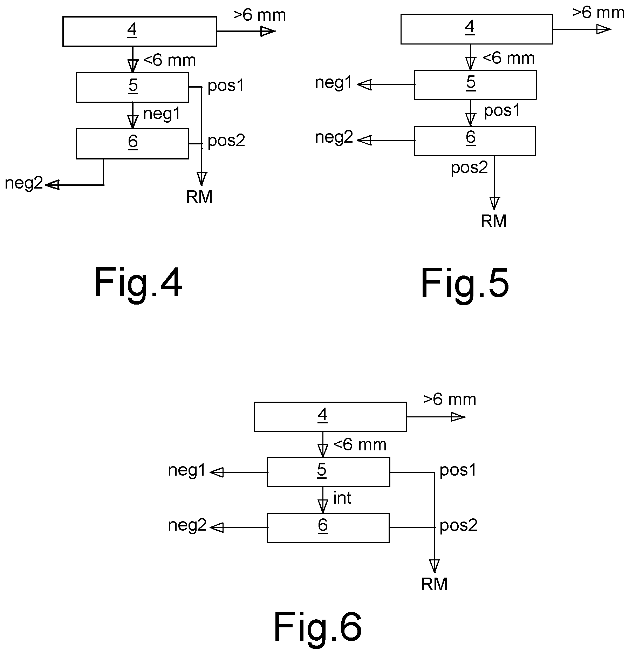

The present plant with a double ballistic-centrifugal separator can be arranged in three different configurations, and therefore operating modes, as shown in the diagrams of figures 4 to 6 and illustrated as follows (all percentages are expressed in mass).

1st configuration (Fig.4): after separation of the fine fraction <6 mm by means of a screening system 4, a first separator 5 operates on this fine fraction with a first drum rotating at a speed such as to direct to the positive collection area (pos1) 25-30% of material with a grain size >2 mm, which contains about 70% of the NF metal present in the fine fraction, while a second separator 6 receives, by means of a negative collection belt (negl), the remaining 70-75% of the ash. This second separator 6 works on said negative (neg1) with a second drum rotating at a speed that is about 10-15% higher than the speed of the first drum, so as to throw into the collection of the positive (pos2) another 10% or so of material that will in turn include another 70% of the NF metal left in the first negative (neg1) corresponding to about another 21% of the total NF metal contained in the ash <6 mm. In this way, in the combined positive of the two separators 5, 6 (pos1+pos2) 35-40% of the ash >2 mm containing about 90% of the NF metal present at the start is collected, to be sent to a subsequent metal recovery line RM, while in the residual negative (neg2) there remains a minimum quantity of metals that makes its disposal or reuse easy.

2nd configuration (Fig.5): in this case the first separator 5 operates on the fine fraction coming from the screening system 4 with a first drum rotating at a speed (e.g. 1000 rpm) which is about 20-25% higher than the speed of the first configuration, so that only about 40% of the ash containing most of the slurry and ash <2 mm and a few percentage points of NF metals is directed to the collection area of the negative (negl), while the remaining about 60% (pos1) including most of the NF metals and gravel of 2-6 mm size, part of the ash <2 mm and the slurry is collected by a belt and sent to the second separator 6. This second separator 6 works on said positive (pos1) with a second drum rotating at a speed (e.g. 850 rpm) which is about 15-20% lower than the speed of the first drum, so as to throw into the collection of the negative (neg2) the remaining slurry with the ash <2 mm while the second positive (pos2) collects 35-40% of the ash >2 mm containing about 90% of the NF metal present at the start, to be sent to a subsequent metal recovery line RM. Also here in the combined negative of the two separators 5, 6 (neg1+neg2) there remains a minimum quantity of metals that makes its disposal or reuse easy.

3rd configuration (Fig.6): In this case when the first separator 5 operates on the fine fraction coming from the screening system 4 the material is divided into three collection sectors, i.e. a collection area of the negative (neg1) that collects about 25% of the ash composed of the finest parts full of slurry and almost free of metals, a collection area of the positive (pos1) that collects another 25% composed of gravel of about 3-6 mm size and containing about 70% of the NF metals present in the fine fraction, and an intermediate (int) area that collects the remaining 50% of about 1-3 mm size, still poorly workable, which is collected by a belt and sent to the second separator 6. This second separator 6 works on said intermediate material (int) with a second rotating drum that concentrates in the positive (pos2) another 10% of ash >2 mm, containing the remaining NF metal which is combined with 25% of the first positive (pos1) and sent to a subsequent metal recovery line RM. Also here in the combined negative of the two separators 5, 6 (neg1+neg2) there remains a minimum quantity of metals that makes its disposal or reuse easy.

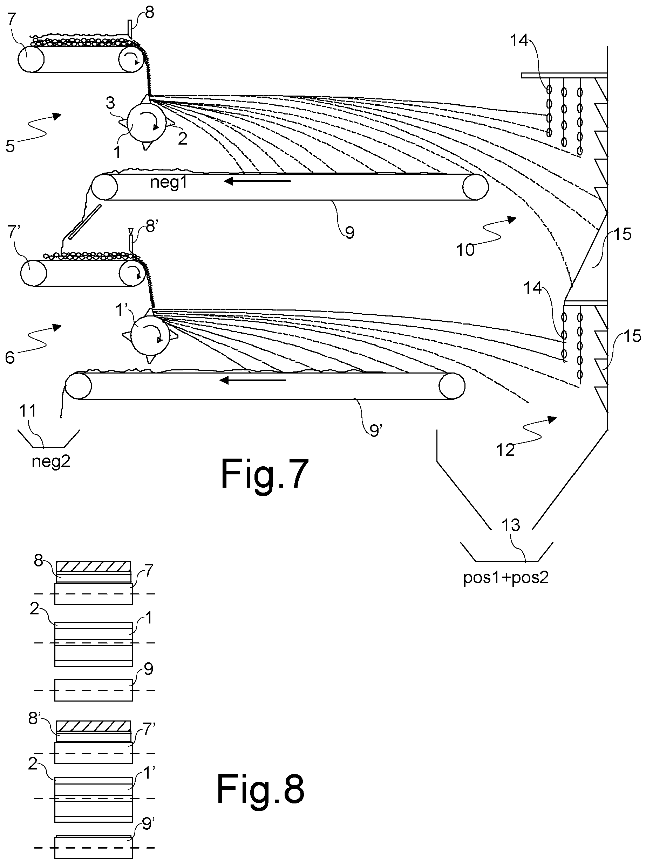

Referring to Figures 7 and 8, it can be seen that a system according to the present invention comprises a first ballistic separator 5 equipped with a drum 1 fed by a first conveyor belt 7, driven by a variable speed motor, and equipped with a vertically movable baffle 8 for the regulation of the thickness of the layer of material. The conveyor belt 7 is equipped with means for adjusting its position with respect to drum 1, being preferably mounted on slides whose position is defined by worm screws, to set correctly the fall trajectory of the material to make it coincide with the impact face of the throw slats 2 of the drum 1 below, which rotates quickly, also driven by a variable speed motor, around an axis arranged perpendicular to the direction of material feed.

Thanks to the variability of the angle α of the impact face 3, it is possible to make the separator work with variable material fall trajectories by adjusting the position and speed of the conveyor belt 7, since it is possible to prepare for each trajectory a specific inclination of the impact face 3 so as to obtain every time that the initial throw direction of the material is substantially orthogonal to the fall trajectory. This allows to optimize both the flow rate of the material according to its grain size and the dehumidification of the compact components to be recovered and the concentration of metal therein. Furthermore, the material feed speed can be increased to achieve a greater separator productivity, i.e. a greater hourly flow rate of treated material.

Therefore, the possibility to vary the fall trajectories of the material (and consequently the throw trajectories) allows to better direct the compact components with the presence of metals to be recovered, both as a function of the percentages of presence of these components, and as a function of the degree of moisture and the material feed rate.

A second conveyor belt 9, which moves in the opposite direction with respect to the first conveyor belt 7, collects the first negative (neg1) and conveys it towards the second separator 6 where a third conveyor belt 7' feeds the second drum 1' and is equipped with a relative baffle 8' moving vertically for adjusting the thickness of the layer of material. The inclination of the second conveyor belt 9 can be adjusted to increase or decrease the trajectories that reach the positive collection zone 10 (pos1) and in contrast decrease or increase the negative (neg1) to be relaunched.

The third conveyor belt 7' is preferably identical to the first conveyor belt 7 and in any case is provided with means for adjusting its speed and position with respect to the second drum 1', which is in turn preferably identical to the first drum 1' except for the greater inclination of the impact face 3, as explained above. A fourth conveyor belt 9' collects the second negative (neg2) and conveys it to a container 11, said fourth conveyor belt 9' being preferably identical to the second conveyor belt 9 and in any case having an adjustable inclination like the latter to vary the zone 12 of collection of the positive (pos2).

The ash >2 mm containing the ferrous and non-ferrous metals is then collected in a container 13 which receives the positive from the collection areas 10, 12 which are equipped with kinetic energy damping systems such as chains 14 arranged at various heights and distances along the trajectories and a coating 15 in a damping and wear-resistant material (e.g. Vulkollan).

The changes to be made to the plant illustrated in Figures 7 and 8 to obtain the diagram configurations in Figures 5 and 6 are obvious to a person skilled in the art. For example, in the second configuration of Fig.5 the second conveyor belt 9 receives the positive (pos1) instead of the negative (negl), which goes directly into the container 11, and in the third configuration of Fig.6 the second conveyor belt 9 receives the intermediate material (int) while the negative (neg1) and the positive (pos1) go directly into the containers 11, 13 respectively.

This separation plant is therefore suitable for treating the fine fraction of various types of wet granular material (moisture 10-30%, particle size up to 6 mm) with the presence of metals and other compact materials to be concentrated and dehumidified for a subsequent specific separation, for example through iron removers, eddy current separators, densimetric tables, air sifting, etc.

The relevant process implemented by this plant can therefore be summarized in the following phases:
(a) ash screening to separate the fine fraction <6 mm;
(b) a first ballistic separation of said fine fraction into at least a first negative portion (neg1) substantially <2 mm and a first positive portion (pos1) substantially sized 2-6 mm;
(c) a second ballistic separation of one of the portions obtained in step (b) into a second negative portion (neg2) substantially <2 mm and a second positive portion (pos2) substantially sized 2-6 mm;
(d) the collection of said second negative portion (neg2) and said second positive portion (pos2) in their respective containers (11, 13) together with the corresponding portion(s) obtained in step (b) and not separated in step (c).

In particular, in the third operating mode described above, the fine fraction is divided in phase (b) into a first negative portion (negl), a first positive portion (pos1) and an intermediate portion (int) which is the one separated in the following phase (c), while the other two portions (neg1, pos1) go directly to collection in phase (d).

It is clear that the above-described and illustrated embodiments of the plant and process according to the invention are only examples susceptible to numerous variations within the scope of the claims. In particular, the dimensions of drums 1, 1' and throw slats 2, as well as the number of throw slats, can vary according to specific design requirements within the scope of the claims. Similarly, the means for regulating the plant operating parameters, such as the speed of rotation of the drums, the feed speed of the conveyor belts and their positioning, etc. can be of any type suitable for this purpose within the scope of the claims.

## Claims

1. Separation plant for the treatment of incinerator bottom ash and similar materials with 10-30% moisture and grain size about <6 mm, comprising a sieving system (4) capable of separating a fine fraction having said grain size, a first ballistic separator (5) provided with a first variable-speed conveyor belt (7) that feeds the material of said fine fraction to a first variable-speed drum (1) that rotates around an axis arranged perpendicularly to the material feed direction, as well as a second conveyor belt (9) that collects a portion of the material separated by said first ballistic separator (5), said first conveyor belt (7) being provided with means to adjust its position with respect to said first drum (1) and the thickness of the material layer that it feeds to the first drum (1), which is provided with a plurality of evenly spaced longitudinal throw slats (2) extending in a substantially radial direction and provided with an impact face (3) on the side towards the direction of rotation of the drum (1), said impact face (3) having a radially proximal end more advanced, in the direction of rotation, than the radially distal end whereby the inclination angle (α) comprised between the diametral plane containing said distal end and the impact face (3) has a value comprised between 10° and 45°, said separation plant being **characterized in that** it further includes a second ballistic separator (6) provided with a third variable-speed conveyor belt (7') that feeds the material to be treated to a second variable-speed drum (1') that rotates around an axis arranged perpendicularly to the material feed direction, as well as a fourth conveyor belt (9') that collects a portion of the material separated by said second ballistic separator (6), said third conveyor belt (7') being provided with means to adjust its position with respect to said second drum (1') and the thickness of the material layer that it feeds to the second drum (1'), which is provided with a plurality of throw slats (2) having the same features of the throw slats (2) of the first drum (1), said second conveyor belt (9) being arranged to feed the third conveyor belt (7').

2. Separation plant according to claim 1, **characterized in that** it further includes means to adjust the inclination of the second conveyor belt (9) and/or of the fourth conveyor belt (9').

3. Separation plant according to claim 1 or 2, **characterized in that** the positive collecting regions (10, 12) of the two ballistic separators (5, 6) are provided with systems that reduce the kinetic energy of the incoming particles (P), preferably chains (14) arranged at different heights and distances along the trajectories and a coating (15) of a dampening and wear-resistant material.

4. Separation plant according to any of the preceding claims, **characterized in that** the impact face (3) of the throw slats (2) has a linear development inclined according to the inclination angle (α) which is radiused in a distal portion (3a) to an involute-shaped curved segment over a height equal to 17±5% of the overall height of the slat (2).

5. Separation plant according to any of the preceding claims, **characterized in that** it further includes means for removably fixing the slats (2) on the drums (1, 1').

6. Separation process for the treatment of incinerator bottom ash and similar materials with 10-30% moisture and grain size about <6 mm, by means of a separation plant according to any of the preceding claims, including the following steps:
a) sieving the material to be treated so as to separate a fine fraction having said grain size;
b) a first ballistic separation of said fine fraction into at least a first negative portion (neg1) substantially <2 mm and a first positive portion (pos1) substantially sized 2-6 mm by means of the first ballistic separator (5);
c) a second ballistic separation of one of the portions obtained in step b) into a second negative portion (neg2) substantially <2 mm and a second positive portion (pos2) substantially sized 2-6 mm, by means of the second ballistic separator (6),
d) collecting said second negative portion (neg2) and said second positive portion (pos2) into respective containers (11, 13) together with the corresponding portion(s) obtained in step b) and not separated in step c).

7. Separation process according to claim 6, **characterized in that** the fine fraction is separated in step b) into a first negative portion (negl), a first positive portion (pos1) and an intermediate portion (int) which is the one that is separated in the subsequent step c), whereas the other two portions (neg1, pos1) go directly to the collecting in step d).

8. Separation process according to claim 7, **characterized in that** the first negative portion (neg1) includes about 25% wt. of the fine fraction and consists of the finest particles, the first positive portion (pos1) includes another about 25% sized about 3-6 mm and the intermediate portion (int) includes the remaining about 50% sized about 1-3 mm, from which in the subsequent step c) there is separated a second positive portion (pos2) that includes another about 10% of material with grain size >2 mm.

9. Separation process according to claim 6, **characterized in that** the fine fraction is separated in step b) into a first positive portion (pos1), that includes about 25-30% wt. of the fine fraction and consists of material with grain size >2 mm, and a first negative portion (neg1) that includes the remaining 70-75%, from which in the subsequent step c) there is separated a second positive portion (pos2) that includes another about 10% of material with grain size >2 mm.

10. Separation process according to claim 9, **characterized in that** in step c) a second rotating drum (1') of the second ballistic separator (6) rotates at a speed that is higher by about 10-15% than the speed of a first rotating drum (1) of the first ballistic separator (5).

11. Separation process according to claim 6, **characterized in that** the fine fraction is separated in step b) into a first negative portion (negl), that includes about 40% wt. of the fine fraction and consists of material with grain size <2 mm, and a first positive portion (pos1) that includes the remaining about 60%, from which in the subsequent step c) there is separated a second positive portion (pos2) that includes about 35-40% of material with grain size >2 mm.

12. Separation process according to claim 11, **characterized in that** in step c) a second rotating drum (1') of the second ballistic separator (6) rotates at a speed that is lower by about 15-20% than the speed of a first rotating drum (1) of the first ballistic separator (5).

13. Separation process according to any of claims 6 to 12, **characterized in that** in step c) a second rotating drum (1') of the second ballistic separator (6) has throw slats (2) having an inclination (α) of the impact face (3) that is higher by 30-40% with respect to the throw slats (2) of a first rotating drum (1) of the first ballistic separator (5), going preferably from about 15° of said first drum (1) to about 20° of said second drum (1').

14. Separation process according to any of claims 6 to 13, **characterized in that** the fine fraction is fed in step b) with a moisture level of about 20% and a flow rate of about 20 t/h for each meter of useful width of a first rotating drum (1) of the first ballistic separator (5).

## Patentansprüche

1. Trennanlage zur Behandlung von Bodenasche einer Verbrennungsanlage und ähnlichen Materialien mit 10-30% Feuchtigkeit und einer Korngröße von etwa <6 mm, umfassend ein Siebsystem (4), das in der Lage ist, eine Feinfraktion mit der besagten Korngröße abzutrennen, einen ersten ballistischen Separator (5), der mit einem ersten Förderband (7) variabler Geschwindigkeit versehen ist, das die Materialien der besagten Feinfraktion einer ersten Trommel (1) variabler Geschwindigkeit zuführt, die um eine Achse rotiert, welche rechtwinklig zu der Richtung der Materialzufuhr angeordnet ist, sowie ein zweites Förderband (9), welches einen Teil des Materials einsammelt, das von dem ersten ballistischen Separator (5) getrennt wurde, wobei das besagte erste Förderband (7) zur Einstellung seiner Position im Hinblick auf die besagte erste Trommel (1) sowie im Hinblick auf die Dicke der Materialschicht, welche es der ersten Trommel (1) zuführt, mit einem Mittel versehen ist, das mit einer Vielzahl von gleichmäßig beabstandeten, in Längsrichtung verlaufenden Schleuderleisten (2) versehen ist, die sich in einer substantiell radialen Richtung erstrecken und mit einer Aufprallfläche (3) an derjenigen Seite versehen sind, die der Drehrichtung der Trommel (1) zugewandt ist, wobei die besagte Aufprallfläche (3) ein radial innenliegendes, in der Drehrichtung weiter vorgeschobenes Ende aufweist als das radial außenliegende Ende, wobei der Neigungswinkel (α) zwischen derjenigen diametralen Ebene, die das außenliegende Ende aufweist, und der Aufprallfläche (3) einen Wert zwischen 10° und 45° aufweist, wobei die besagte Trennanlage **dadurch gekennzeichnet ist, dass** sie ferner einen zweiten ballistischen Separator (6) umfasst, der mit einem dritten Förderband (7') variabler Geschwindigkeit versehen ist, welches das zu behandelnde Material zu einer zweiten Trommel (1') variabler Geschwindigkeit zuführt, die um eine Achse rotiert, welche rechtwinklig zu der Richtung der Materialzufuhr angeordnet ist, sowie ein viertes Förderband (9'), welches den Teil des Materials einsammelt, der von dem besagten zweiten ballistischen Separator (6) abgetrennt wurde, wobei das besagte dritte Förderband (7') zur Einstellung seiner Position im Hinblick auf die zweite Trommel (1') sowie im Hinblick auf die Dicke der Materialschicht, die es der zweiten Trommel (1') zuführt, mit einem Mittel versehen ist, das mit einer Vielzahl von Schleuderleisten (2) versehen ist, welche die gleichen Merkmale wie die Schleuderleisten (2) der ersten Trommel (1) aufweisen, wobei das zweite Förderband (9) zur Beschickung des dritten Förderbands (7') ausgebildet ist.

2. Trennanlage gemäß Anspruch 1, **dadurch gekennzeichnet, dass** sie ferner ein Mittel zur Einstellung der Neigung des zweiten Förderbands (9) und/oder des vierten Förderbands (9') aufweist.

3. Trennanlage gemäß Anspruch 1 oder 2, **dadurch gekennzeichnet, dass** die positiven Sammelbereiche (10, 12) der zwei ballistischen Separatoren (5, 6) mit Systemen versehen sind, welche die kinetische Energie der eintreffenden Teilchen (P) reduzieren, bevorzugt mit Ketten (14), die an verschiedenen Höhen und Abständen entlang der Flugbahnen angeordnet sind, sowie mit einer Beschichtung (15) aus einem aufpralldämpfenden und verschleißbeständigen Material.

4. Trennanlage gemäß einem der vorhergehenden Ansprüche, **dadurch gekennzeichnet, dass** die Aufprallfläche (3) der Schleuderleisten (2) eine Entwicklung aufweist von einem linearen Verlauf mit einem Neigungswinkel (α) bis zu einem gerundeten Segment in Evolventenform in einem distalen Bereich (3a) über einer Höhe von 17±5% der Gesamthöhe der Leiste (2).

5. Trennanlage gemäß einem der vorhergehenden Ansprüche, **dadurch gekennzeichnet, dass** sie ferner ein Mittel zur lösbaren Befestigung der Leisten (2) an den Trommeln (1, 1') aufweist.

6. Trennverfahren zur Behandlung von Bodenasche einer Verbrennungsanlage und ähnlichen Materialien mit 10-30% Feuchtigkeit und einer Korngröße von ca. <6 mm, mittels einer Trennanlage nach einem der vorhergehenden Ansprüche, umfassend folgende Schritte:
a) Sieben des zu behandelnden Materials, um die Feinfraktion mit der besagten Korngröße abzutrennen;
b) eine erste ballistische Separation der besagten Feinfraktion in wenigstens einen negativen Anteil (negl), substantiell <2 mm, und einen ersten positiven Anteil (pos1), substantiell von der Größe 2-6 mm; mittels des ersten ballistischen Separators (5);
c) eine zweite ballistische Separation von einem der im Schritt b) erhaltenen Anteile in einen zweiten negativen Anteil (neg2), substantiell <2 mm, und einen zweiten positiven Anteil (pos2), substantiell in der Größe 2-6 mm, mittels des zweiten ballistischen Separators (6);
d) Einsammeln des besagten zweiten negativen Anteils (neg2) und des besagten zweiten positiven Anteils (pos2) in zugeordnete Behälter (11, 13) zusammen mit dem/den entsprechenden Anteil(en), der/die im Schritt b) erhalten wurde(n) und im Schritt c) nicht getrennt wurde(n).

7. Trennverfahren gemäß Anspruch 6, **dadurch gekennzeichnet, dass** die Feinfraktion in dem Schritt b) aufgetrennt wird in einen ersten negativen Anteil (negl), einen ersten positiven Anteil (pos1) und einen dazwischenliegenden Anteil (int), welcher derjenige ist, der in einem nachfolgenden Schritt c) aufgetrennt wird, während die anderen zwei Anteile (neg1, pos1) direkt zu dem Schritt d) des Einsammelns gelangen.

8. Trennverfahren gemäß Anspruch 7, **dadurch gekennzeichnet, dass** der erste negative Anteil (neg1) ca. 25 Gew.-% der Feinfraktion enthält und aus den feinsten Partikeln besteht, wobei der erste positive Anteil (pos1) weitere ca. 25% in einer Größe von ca. 3-6 mm enthält und der dazwischenliegende Anteil (int) die restlichen ca. 50% in einer Größe von ca. 1-3 mm enthält, von welchem in dem nachfolgenden Schritt c) ein zweiter positiver Anteil (pos2) abgetrennt wird, der weitere ca. 10% des Materials mit einer Korngröße >2 mm enthält.

9. Trennverfahren gemäß Anspruch 6, **dadurch gekennzeichnet, dass** die Feinfraktion in dem Schritt b) aufgetrennt wird in einen ersten positiven Anteil (pos1), der ca. 25-30 Gew.-% der Feinfraktion enthält und aus Material mit der Korngröße >2 mm besteht, und einen ersten negativen Anteil (negl), der die restlichen 70-75% enthält, von welchem in dem nachfolgenden Schritt c) ein zweiter positiver Anteil (pos2) abgetrennt wird, der weitere ca. 10% des Materials mit einer Korngröße > 2mm enthält.

10. Trennverfahren gemäß Anspruch 9, **dadurch gekennzeichnet, dass** in dem Schritt c) eine zweite rotierende Trommel (1') des zweiten ballistischen Separators (6) mit einer Geschwindigkeit rotiert, die um ca. 10-15% größer ist als die Geschwindigkeit der ersten rotierenden Trommel (1) des ersten ballistischen Separators (5).

11. Trennverfahren gemäß Anspruch 6, **dadurch gekennzeichnet, dass** die Feinfraktion in dem Schritt b) separiert wird in einen ersten negativen Anteil (negl), der etwa 40 Gew.-% der Feinfraktion enthält und aus einem Material mit einer Korngröße <2 mm besteht, und einem ersten positiven Anteil (pos1), der die restlichen 60% enthält, aus welchem in einem nachfolgenden Schritt c) ein zweiter positiver Anteil (pos2) abgetrennt wird, der ca. 35-40% des Materials mit einer Korngröße >2 mm umfasst.

12. Trennverfahren gemäß Anspruch 11, **dadurch gekennzeichnet, dass** im Schritt c) eine zweite rotierende Trommel (1') des zweiten ballistischen Separators (6) mit einer Geschwindigkeit rotiert, die um ca. 15-20% niedriger ist als die Geschwindigkeit einer ersten rotierenden Trommel (1) des ersten ballistischen Separators (5).

13. Trennverfahren gemäß einem der Ansprüche 6 bis 12, **dadurch gekennzeichnet, dass** in dem Schritt c) eine zweite rotierende Trommel (1') des zweiten ballistischen Separators (6) Schleuderleisten (2) mit einer Neigung (α) der Aufprallfläche (3) aufweist, die um 30-40% größer ist im Vergleich zu den Schleuderleisten (2) einer ersten rotierenden Trommel (1) des ersten ballistischen Separators (5), und bevorzugt von ca. 15° der besagten ersten Trommel (1) bis etwa 20° der besagten zweiten Trommel (1') reicht.

14. Trennverfahren gemäß einem der Ansprüche 6 bis 13, **dadurch gekennzeichnet, dass** die Feinfraktion in dem Schritt b) mit einem Feuchtigkeitsgehalt von ca. 20% und einer Durchflussrate von ca. 20 t/h für jeden Meter der nutzbaren Breite einer ersten rotierenden Trommel (1) des ersten ballistischen Separators (5) zugeführt wird.

## Revendications

1. Installation de séparation pour le traitement des cendres de fond d'incinérateur et matériaux similaires avec une humidité de 10 à 30 % et une granulométrie d'environ < 6 mm, comprenant un système de tamisage (4) pouvant séparer une partie fine ayant ladite granulométrie, un premier séparateur balistique (5) prévu avec une première courroie transporteuse à vitesse variable (7) qui amène le matériau de ladite partie fine à un premier tambour à vitesse variable (1) qui tourne autour d'un axe agencé perpendiculairement à la direction d'alimentation de matériau, ainsi qu'une deuxième courroie transporteuse (9) qui collecte une partie du matériau séparée par ledit premier séparateur balistique (5), ladite première courroie transporteuse (7) étant prévue avec des moyens pour ajuster sa position par rapport audit premier tambour (1) et l'épaisseur de la couche de matériau qui est amenée au premier tambour (1), qui est prévue avec une pluralité de lattes de lancement (2) longitudinales régulièrement espacées s'étendant dans une direction sensiblement radiale et prévues avec une face d'impact (3) sur le côté vers la direction de rotation du tambour (1), ladite face d'impact (3) ayant une extrémité radialement proximale plus avancée, dans la direction de rotation, que l'extrémité radialement distale, moyennant quoi l'angle d'inclinaison (α) compris entre le plan diamétral contenant ladite extrémité distale et la face d'impact (3) a une valeur comprise entre 10° et 45°, ladite installation de séparation étant **caractérisée en ce qu'**elle comprend en outre un second séparateur balistique (6) prévu avec une troisième courroie transporteuse à vitesse variable (7') qui amène le matériau à traiter à un second tambour à vitesse variable (1') qui tourne autour d'un axe agencé perpendiculairement à la direction d'alimentation de matériau, ainsi qu'une quatrième courroie transporteuse (9') qui collecte une partie du matériau séparée par ledit second séparateur balistique (6), ladite troisième courroie transporteuse (7') étant prévue avec des moyens pour ajuster sa position par rapport audit second tambour (1') et l'épaisseur de la couche de matériau qui est amenée au second tambour (1') qui est prévue avec une pluralité de lattes de lancement (2) ayant les mêmes caractéristiques des lattes de lancement (2) du premier tambour (1), ladite deuxième courroie transporteuse (9) étant agencée pour alimenter la troisième courroie transporteuse (7').

2. Installation de séparation selon la revendication 1, **caractérisée en ce qu'**elle comprend en outre des moyens pour ajuster l'inclinaison de la deuxième courroie transporteuse (9) et/ou de la quatrième courroie transporteuse (9').

3. Installation de séparation selon la revendication 1 ou 2, **caractérisée en ce que** les régions de collecte positives (10, 12) des deux séparateurs balistiques (5, 6) sont prévues avec des systèmes qui réduisent l'énergie cinétique des particules entrantes (P), de préférence des chaînes (14) agencées à différentes hauteurs et distances le long des trajectoires et un revêtement (15) d'un matériau d'amortissement et résistant à l'usure.

4. Installation de séparation selon l'une quelconque des revendications précédentes, **caractérisée en ce que** la face d'impact (3) des lattes de lancement (2) a un développement linéaire incliné selon l'angle d'inclinaison (α) qui est arrondi dans une partie distale (3a) jusqu'à un segment incurvé en forme de volute sur une hauteur égale à 17±5 % de la hauteur totale de la latte (2).

5. Installation de séparation selon l'une quelconque des revendications précédentes, **caractérisée en ce qu'**elle comprend en outre des moyens pour fixer, de manière amovible, les lattes (2) sur les tambours (1, 1').

6. Procédé de séparation pour le traitement des cendres de fond d'incinérateur et matériaux similaires avec une humidité de 10-30 % et une granulométrie d'environ < 6 mm, au moyen d'une installation de séparation selon l'une quelconque des revendications précédentes, comprenant les étapes suivantes :
a) tamiser le matériau à traiter afin de séparer une partie fine ayant ladite granulométrie ;
b) une première séparation balistique de ladite partie fine en au moins une première partie négative (neg1) sensiblement < 2 mm et en une première partie positive (pos1) sensiblement de 2-6 mm, au moyen du premier séparateur balistique (5) ;
c) une seconde séparation balistique de l'une des parties obtenues à l'étape b) en une seconde partie négative (neg2) sensiblement < 2 mm et en une seconde partie positive (pos2) sensiblement de 2-6 mm, au moyen du second séparateur balistique (6),
d) collecter ladite seconde partie négative (neg2) et ladite seconde partie positive (pos2) dans des récipients (11, 13) respectifs conjointement avec la (les) partie(s) correspondante(s) obtenue(s) à l'étape b) et non séparée(s) à l'étape c).

7. Procédé de séparation selon la revendication 6, **caractérisé en ce que** la partie fine est séparée à l'étape b) en une première partie négative (neg1), en une première partie positive (pos1) et en une partie intermédiaire (int) qui est celle qui est séparée à l'étape c) suivante, alors que les deux autres parties (neg1, pos1) passent directement à la collecte à l'étape d).

8. Procédé de séparation selon la revendication 7, **caractérisé en ce que** la première partie négative (neg1) comprend environ 25 % en poids de partie fine et se compose des particules les plus fines, la première partie positive (pso1) comprend environ les autres 25 % en poids avec une dimension d'environ 3-6 mm et la partie intermédiaire (int) comprend le reste représentant environ 50 % avec une dimension d'environ 1-3 mm, à partir duquel à l'étape c) suivante, on sépare une seconde partie positive (pos2) qui comprend environ les autres 10 % de matériau avec une granulométrie > 2 mm.

9. Procédé de séparation selon la revendication 6, **caractérisé en ce que** la partie fine est séparée à l'étape b) en une première partie positive (pos1) qui comprend environ 25-30 % en poids de la partie fine et se compose de matériau avec une granulométrie > 2 mm, et une première partie négative (neg1) qui comprend le reste représentant 70-75 %, duquel, à l'étape c) suivante, on sépare une seconde partie positive (pos2) qui comprend les autres environ 10 % de matériau avec une granulométrie > 2 mm.

10. Procédé de séparation selon la revendication 9, **caractérisé en ce qu'**à l'étape c), un second tambour rotatif (1') du second séparateur balistique (6) tourne à une vitesse qui est supérieure d'environ 10-15 % à la vitesse d'un premier tambour rotatif (1) du premier séparateur balistique (5).

11. Procédé de séparation selon la revendication 6, **caractérisé en ce que** la partie fine est séparée à l'étape b) en une première partie négative (neg1) qui comprend environ 40 % en poids de partie fine et se compose d'un matériau avec une granulométrie < 2 mm et en une première partie positive (pos1) qui comprend le reste représentant environ 60 % duquel, à l'étape c) suivante, on sépare une seconde partie positive (pos2) qui comprend environ 35-40 % de matériau avec une granulométrie > 2 mm.

12. Procédé de séparation selon la revendication 11, **caractérisé en ce qu'**à l'étape c), un second tambour rotatif (1') du second séparateur balistique (6) tourne à une vitesse qui est inférieure d'environ 15-20 % à la vitesse d'un premier tambour rotatif (1) du premier séparateur balistique (5).

13. Procédé de séparation selon l'une quelconque des revendications 6 à 12, **caractérisé en ce qu'**à l'étape c), un second tambour rotatif (1') du second séparateur balistique (6) a des lattes de lancement (2) ayant une inclinaison (α) de la face d'impact (3) qui est supérieure de 30-40 % par rapport aux lattes de lancement (2) d'un premier tambour rotatif (1) du premier séparateur balistique (5), passant de préférence d'environ 15° dudit premier tambour (1) à environ 20° dudit second tambour (1').

14. Procédé de séparation selon l'une quelconque des revendications 6 à 13, **caractérisé en ce que** la partie fine est amenée à l'étape b) avec un niveau d'humidité d'environ 20 % et un débit d'environ 20 t/h pour chaque mètre de largeur utile d'un premier tambour rotatif (1) du premier séparateur balistique (5).
